# EUROPÄISCHE PATENTSCHRIFT

(11) **EP 0 873 933 B1**
(45) Veröffentlichungstag und Bekanntmachung des Hinweises auf die Patenterteilung: **13.08.2003**
(21) Anmeldenummer: 98102061.3
(22) Anmeldetag: 06.02.1998
(51) Int. Cl.: B62D 29/00, B62D 23/00, B62D 27/02

(54) **Rahmenkonstruktion**
Frame construction
Structure de cadre

(30) Priorität: 22.04.1997 DE 19716865
(43) Veröffentlichungstag der Anmeldung: 28.10.1998
(73) Patentinhaber: Dr.Ing.h.c. F. Porsche Aktiengesellschaft, 70435 Stuttgart (DE)
(72) Erfinder: Separautzki, Reinhold, 71696 Möglingen (DE)

(56) Entgegenhaltungen:
- WO-A-94/04766
- US-A- 3 460 235
- US-A- 4 542 846
- US-A- 5 474 331

## Beschreibung

Die Erfindung betrifft eine Rahmenkonstruktion, die sich aus mehreren rohrförmigen Rahmenelementen und Knotenelementen zusammensetzt, gemäß dem Oberbegriff des Patentanspruchs 1.

Aus der DE 195 06 160 A1 geht eine Rahmenkonstruktion für die tragende Struktur einer Fahrzeugkarosserie hervor, die sich aus Rahmenelementen und Knotenelementen zusammensetzt. Sowohl die Rahmenelemente als auch die Knotenelemente werden bei dieser Anordnung durch hydraulisches Innenhochdruckumformen von Aluminium-Rohrprofilen hergestellt. Die Rahmenelemente werden in das angrenzende Knotenelement ein- oder aufgesteckt, wobei eine zusätzliche Sicherung der Steckverbindung durch Schweißen, Kleben, Schrauben oder Nieten erfolgt. Diese Art der Rahmenkonstruktion eignet sich nur für einheitliche Werkstoffe, nicht jedoch für eine Mischbauweise.

Aufgabe der Erfindung ist es, Knotenelemente für eine Rahmenkonstruktion so weiterzubilden, daß an die Knotenelemente auch Rahmenelemente aus unterschiedlichen Werkstoffen anschließbar sind (Mischbauweise).

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die Ausbildung der erfindungsgemäßen innenhochdruchumgeformten Knotenelemente eine Rahmenkonstruktion in Mischbauweise ermöglicht wird, d.h. es können Rahmenelemente aus unterschiedlichen Werkstoffen an das jeweilige Knotenelement angeschlossen werden. Dadurch sind Werkstoffkombinationen wie St/Alu, Alu/St, Alu/Mg, Mg/Alu und dergleichen möglich. Eine derartige Rahmenkonstruktion eignet sich insbesondere für Fahrwerksteile und die tragende Struktur einer Fahrzeugkarosserie.

Ein Ausführungsbeispiel der Erfindung ist in der Zeichnung dargestellt und wird im folgenden näher erläutert.

Es zeigt
- Fig. 1: einen Schnitt durch eine erste Ausführungsform einer Rahmenkonstruktion, wobei an ein Knotenelement drei angrenzende Rahmenelemente angeschlossen sind,
- Fig. 2: einen Schnitt entsprechend Fig. einer zweiten Ausführungsform einer Rahmenkonstruktion und
- Fig. 3: einen Schnitt entsprechend Fig. 2 einer dritten Ausführungsform einer Rahmenkonstruktion.

Eine Rahmenkonstruktion 1 setzt sich im dargestellten Bereich aus mehreren rohrförmigen Rahmenelementen 2, 3, 4 und einem Knotenelement 5 zusammen, wobei die Rahmenelemente 2, 3, 4 und das Knotenelement 5 jeweils durch hydraulisches Innenhochdruckumformen hergestellt und mittels Steckverbindungen 6 'gefügt sind.

In den Ausführungsbeispielen weist das Knotenelement 5 jeweils drei Anschlüsse 7, 8, 9 für die angrenzenden Rahmenelemente 2, 3, 4 auf.

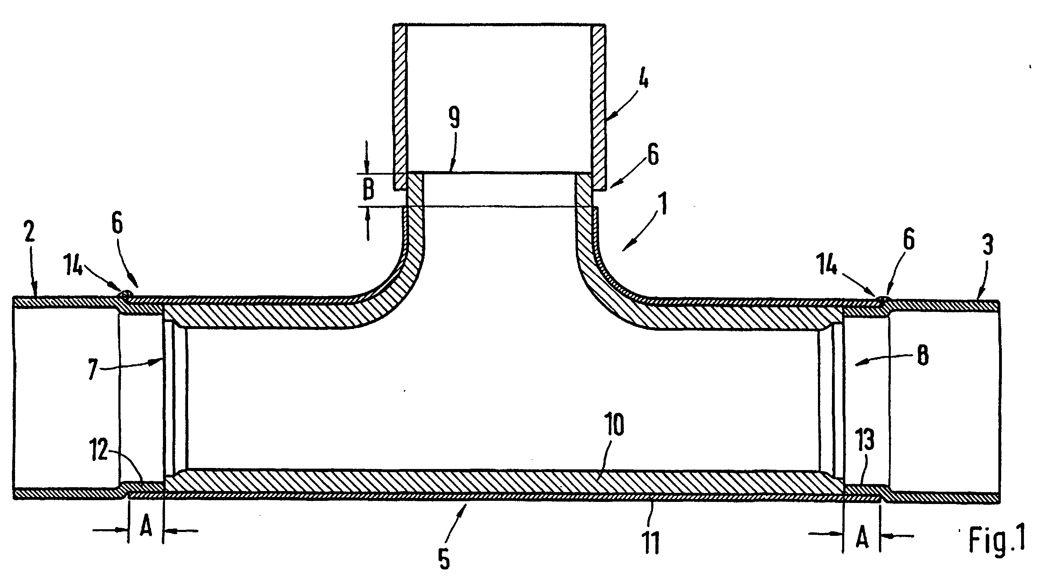

Erfindungsgemäß besteht das Knotenelement 5 aus zumindest zwei ineinandergesteckten rohrförmigen Hohlkörpern 10, 11 aus unterschiedlichen Werkstoffen, wobei die beiden innenhochdruckumgeformten Hohlkörper 10, 11 des Knotenelementes 5 im Bereich der Anschlüsse 7, 8, 9- jeweils in Längsrichtung des Anschlusses gesehen - unterschiedliche Beschnitte aufweisen. Im Bereich des Anschlusses 7, 8, 9 ist einer der beiden Hohlkörper 10 bzw. 11 mit dem angrenzenden werkstoffgleichen Rahmenelement 2 bzw. 3 bzw. 4 durch die Steckverbindung 6 und eine zusätzliche Schweißverbindung miteinander verbunden. Der innere Hohlkörper 10 ist in den Figuren 1 bis 3 jeweils aus Aluminium bzw. einer Aluminiumlegierung gefertigt, wogegen der äußere Hohlkörper 11 aus Stahl besteht. Die Wanddicke des inneren Hohlkörpers 10 kann gleich, dicker oder dünner sein als die Wanddicke des äußeren Hohlkörpers 11. Die Werkstoffpaarung könnte auch umgekehrt sein. Weiters sind Werkstoffpaarungen Alu/Mg, Mg/Alu oder andere denkbar.

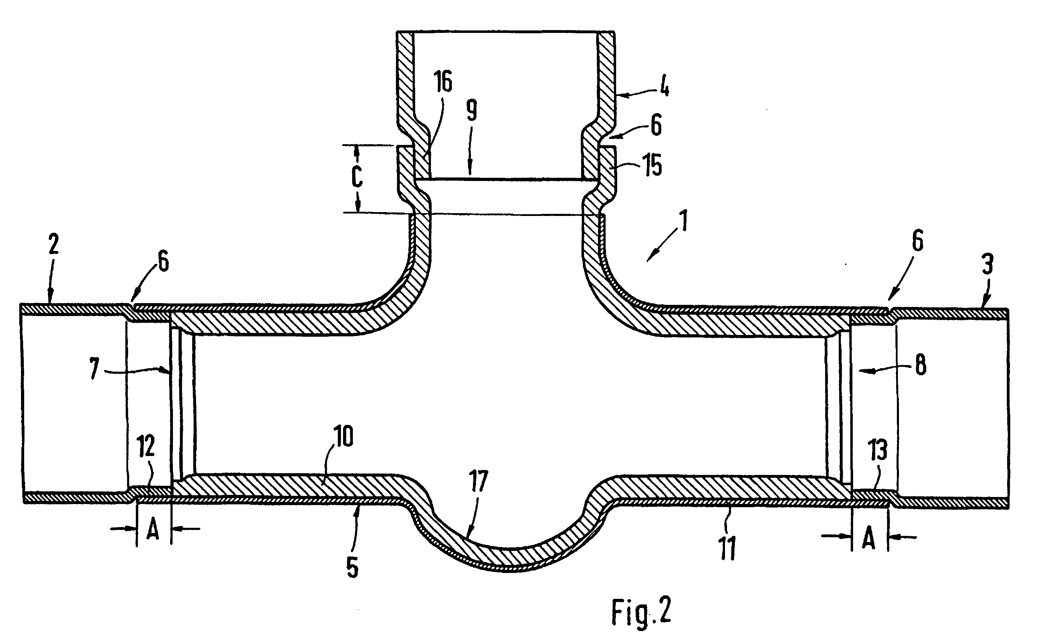

In den Figuren 1 und 2 sind im Bereich der axialen Anschlüsse 7, 8 jeweils Rahmenelemente 2, 3 aus Stahl an das Knotenelement 5 angeschlossen, wogegen an den radialen Anschluß 9 ein Rahmenelement 4 aus Aluminium bzw. einer Aluminiumlegierung angeschlossen ist.

Im Bereich der axialen Anschlüsse 7, 8 steht der äußere Hohlkörper 11 aus Stahl weiter vor als der innenliegende Hohlkörper 10 aus Alu (Maß A). Ein abgesetzter Endbereich 12, 13 des angrenzenden Rahmenelementes 2, 3 ist abschnittsweise in den vorstehenden Bereich des äußeren Hohlkörpers 11 eingesteckt, wobei im Übergangsbereich äußerer Hohlkörper 11 und abgesetzter Endbereich 12, 13 des Rahmenelementes 2, 3 außenseitig eine zusätzliche Schweißverbindung 14 erfolgt. Es ist auch denkbar, anstelle der Schweißverbindung 14 eine Verbindung durch Kleben, Schrauben, Nieten oder dergleichen vorzusehen. Der abgesetzte Endbereich 12, 13 liegt mit oder ohne axialem Spalt am freien Ende des innenliegenden Hohlkörpers 10 an.

In Fig. 1 überragt im Bereich des dritten Anschlusses 9 der innere Hohlkörper 10 den äußeren Hohlkörper 11 um ein Maß B. Auf den vorstehenden Bereich des inneren Hohlkörpers 10 ist außenseitig das Rahmenelement 4 aus dem gleichen Werkstoff wie der innere Hohlkörper 10 aufgesetzt. Ferner kann außenseitig eine zusätzliche Schweißverbindung erfolgen.

In Fig. 2 überragt im Bereich des dritten Anschlusses 9 der innere Hohlkörper 10 den äußeren Hohlkörper 11 um ein Maß C. Bei dieser Variante weist der innere Hohlkörper 10 randseitig eine nach außen gerichtete Aufweitung 15 auf, in die ein nach innen abgesetzter Endbereich 16 des benachbarten Rahmenelementes 4 eingesetzt ist. Auch hier ist eine zusätzliche außenseitige Schweißverbindung zwischen dem inneren Hohlkörper 10 und dem Rahmenelement 4 vorgesehen. In Fig. 2 ist dem radialen Anschluß 9 gegenüberliegend am Knotenelement 5 örtlich zur Formschlußverbesserung eine nach außen gerichtete Ausbauchung 17 an beiden ineinandergesteckten Hohlkörpern 10, 11 des Knotenelements 5 vorgesehen.

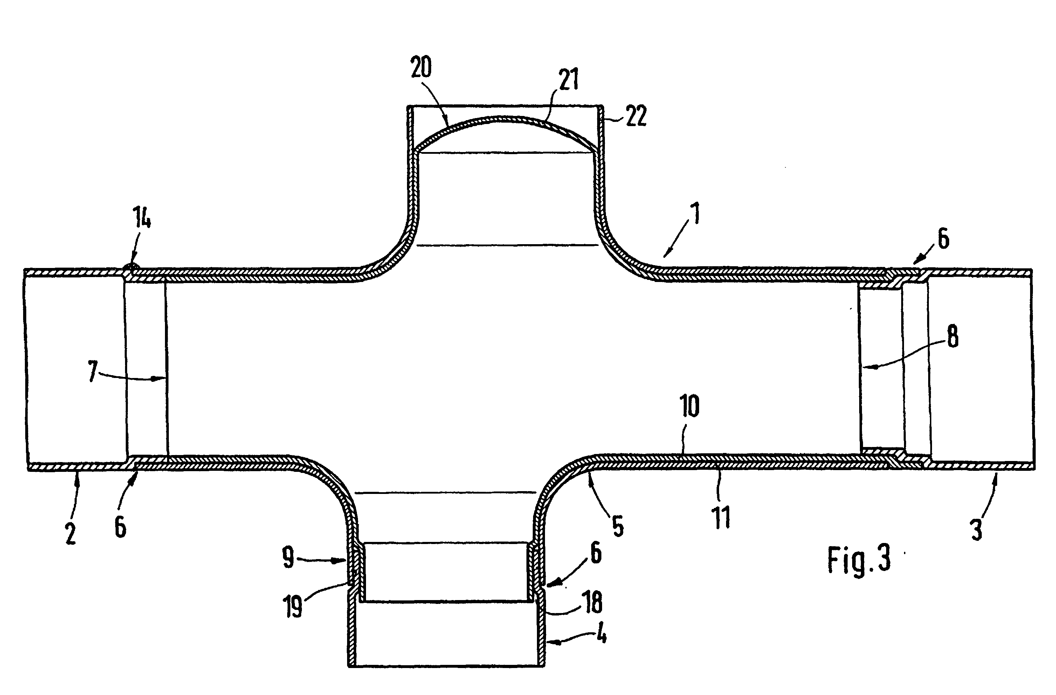

In Fig. 3 ist an den axialen Anschluß 7 ein Rahmenelement 2 aus Stahl und an den anderen axialen Anschluß 8 ein Rahmenelement 3 aus Aluminium angeschlossen. Der radiale untere Anschluß 9 umfaßt ein Rahmenteil 4 aus Stahl.

Im Bereich des radialen Anschlusses 9 ist am Knotenelement 5 ein Ringspalt 18 zwischen dem inneren Hohlkörper 10 und dem äußeren Hohlkörper 11 vorgesehen, in den ein nach innen abgesetzter Endbereich 19 des angrenzenden Rahmenelementes 4 einsetzbar ist. Das Rahmenelement 4 ist mit dem werkstoffgleichen äußeren Hohlkörper 11 örtlich verschweißt.

Ferner weist das Knotenelement 5 auf der dem radialen Anschluß 9 gegenüberliegenden Seite zur Versteifung eine Anformung 20 auf, wobei der innere Hohlkörper 10 eine geschlossene Außenkontur 21 besitzt Der äußere Hohlkörper 11 überragt die geschlossene Außenkontur 21 des inneren Hohlkörpers 10 bereichsweise nach oben hin (vorstehender Kragen 22).

Die dargestellte Rahmenkonstruktion 1 eignet sich vorzugsweise für Fahrwerksteile und insbesondere für die tragende Struktur einer Fahrzeugkarosserie. Daneben sind aber auch andere Anwendungsfälle denkbar. Der innere und der äußere Hohlkörper 10, 11 des Knotenelements 5 können gemeinsam oder aber auch nacheinander innenhochdruckumgeformt werden.

## Patentansprüche

1. Rahmenkonstruktion (1), die sich aus mehreren rohrförmigen Rahmenelementen (2,3,4) und Knotenelementen (5) zusammensetzt, wobei die Rahmenelemente (2,3,4) und die Knotenelemente (5) durch hydraulisches Innenhochdruck-Umformen hergestellt und mittels Steckverbindungen (6) gefügt sind und jedes Knotenelement (5) zumindest zwei Anschlüsse (7,8,9) für angrenzende Rahmenelemente (2,3,4) aufweist, **dadurch gekennzeichnet, daß** wenigstens ein Knotenelement (5) aus zumindest zwei ineinandergesteckten rohrförmigen Hohlkörpern (10, 11) aus unterschiedlichen Werkstoffen besteht, wobei die beiden innenhochdruckumgeformten Hohlkörper (10, 11) des Knotenelements (5) im Bereich der Anschlüsse (7, 8, 9) - in Längsrichtung des jeweiligen Anschlusses gesehen - unterschiedliche Beschnitte aufweisen und daß im Bereich jedes Anschlusses (7, 8, 9) einer der beiden Hohlkörper (10, 11) mit dem angrenzenden, werkstoffgleichen Rahmenelement (2, 3, 4) neben der Steckverbindung (6) durch eine zusätzliche Verbindung (14) miteinander verbunden ist.

2. Rahmenkonstruktion nach Anspruch 1, **dadurch gekennzeichnet, daß** der innere Hohlkörper (10) aus Aluminium- bzw. einer Aluminiumlegierung und der äußere Hohlkörper (11) aus Stahl gefertigt ist oder umgekehrt.

3. Rahmenkonstruktion nach Anspruch 1, **dadurch gekennzeichnet, daß** der innere Hohlkörper (10) aus Aluminium bzw. einer Aluminiumlegierung und der äußere Hohlkörper (11) aus Magnesium bzw. einer Magnesiumlegierung besteht oder umgekehrt.

4. Rahmenkonstruktion nach Anspruch 1, **dadurch gekennzeichnet, daß** der äußere Hohlkörper (11) im Bereich eines Anschlusses (z.B. 7, 8) weiter vorsteht als der innenliegende Hohlkörper (10) und daß der äußere Hohlkörper (11) mit einem eingesteckten, abgesetzten Endbereich (z.B. 12, 13) des angrenzenden Rahmenelementes (2, 3) zusätzlich durch Schweißen, Kleben, Nieten oder dergleichen fest verbunden ist.

5. Rahmenkonstruktion nach Anspruch 1, **dadurch gekennzeichnet, daß** der innere Hohlkörper (10) im Bereich eines Anschlusses (z.B. 9) weiter vorsteht als der äußere Hohlkörper (11) und daß auf den vorstehenden Bereich des inneren Hohlkörpers (10) ein Randbereich des angrenzenden Rahmenelements (4) ein- oder aufgeschoben ist, wobei der innere Hohlkörper (10) mit dem Rahmenelement (4) zusätzlich durch Schweißen, Kleben, Nieten oder dergleichen fest verbunden ist.

6. Rahmenkonstruktion nach Anspruch 1, **dadurch gekennzeichnet, daß** ein abgesetzter Endbereich (19) des Rahmenelements (4) in einen Ringspalt (18) zwischen innerem Hohlkörper (10) und äußerem Hohlkörper (11) einsetzbar ist und daß das Rahmenelement (4) mit dem äußeren Hohlkörper (11) zusätzlich durch Schweißen, Kleben, Nieten oder dergleichen fest verbunden ist.

7. Rahmenkonstruktion nach Anspruch 1, **dadurch gekennzeichnet, daß** das Knotenelement (5) neben den Anschlüssen (7, 8, 9) örtlich eine Ausbauchung (17) aufweist, wobei die Ausbauchung (17) an beiden ineinandergesteckten Hohlkörpern (10, 11) vorgesehen ist.

8. Rahmenkonstruktion nach Anspruch 1, **dadurch gekennzeichnet, daß** das Knotenelement (5) neben den Anschlüssen für die Rahmenelemente (7, 8, 9) eine weitere Anformung (20) aufweist, wobei der innere Hohlkörper (10) des Knotenelements (9) im Bereich der Anformung (20) eine geschlossene Außenkontur (21) aufweist, wogegen der äußere Hohlkörper (11) einen vorstehenden Kragen (22) bildet.

9. Rahmenkonstruktion nach Anspruch 1, **dadurch gekennzeichnet, daß** die Rahmenkonstruktion (1) insbesondere für die tragende Struktur einer Fahrzeugkarosserie anwendbar ist.

## Claims

1. A frame structure (1) which is assembled from a plurality of tubular frame members (2, 3, 4) and junction members (5), wherein the frame members (2, 3, 4) and the junction members (5) are produced by hydraulic internal high-pressure shaping and are joined by means of insertion connexions (6) and each junction member (5) comprises at least two sockets (7, 8, 9) for adjoining frame members (2, 3, 4), **characterized in that** at least one junction member (5) comprises at least two tubular hollow bodies (10, 11) of different materials inserted one into the other, wherein the two hollow bodies (10, 11) - formed by internal high-pressure shaping - of the junction member (5) have different trimmings in the region of the sockets (7, 8, 9), as viewed in the longitudinal direction of the respective socket, and in the region of each socket (7, 8, 9) one of the two hollow bodies (10, 11) is interconnected to the adjoining frame member (2, 3, 4) of the same material by an additional connexion (12) as well as the insertion connexion (6).

2. A frame structure according to Claim 1, **characterized in that** the inner hollow body (10) is produced from aluminium or an aluminium alloy and the outer hollow body (11) is produced from steel, or *vice versa*.

3. A frame structure according to Claim 1, **characterized in that** the inner hollow body (10) consists of aluminium or an aluminium alloy and the outer hollow body (11) consists of magnesium or a magnesium alloy, or *vice versa*.

4. A frame structure according to Claim 1, **characterized in that** the outer hollow body (11) projects further in the region of a socket (*e.g.* 7, 8) than the hollow body (10) situated on the inside, and the outer hollow body (11) is additionally connected to an inserted, offset end region (*e.g.* 12, 13) of the adjoining frame member (2, 3) in a fixed manner by welding, adhesion, riveting or the like.

5. A frame structure according to Claim 1, **characterized in that** the inner hollow body (10) projects further in the region of a socket (*e.g.* 9) than the outer hollow body (11), and an edge region of the adjoining frame member (4) is pressed into or onto the projecting region of the inner hollow body (10), wherein the inner hollow body (10) is additionally connected to the frame member (4) in a fixed manner by welding, adhesion, riveting or the like.

6. A frame structure according to Claim 1, **characterized in that** an offset end region (19) of the frame member (4) can be inserted into an annular gap (18) between the inner hollow body (10) and the outer hollow body (11), and the frame member (4) is additionally connected to the outer hollow body (11) in a fixed manner by welding, adhesion, riveting or the like.

7. A frame structure according to Claim 1, **characterized in that** the junction member (5) is provided locally with a convex portion (17) in addition to the sockets (7, 8, 9), wherein the convex portion (17) is provided on the two hollow bodies (10, 11) inserted one into the other.

8. A frame structure according to Claim 1, **characterized in that** the junction member (5) is provided with a further portion (20) integrally moulded thereon in addition to the sockets for the frame members (7, 8, 9), wherein the inner hollow body (10) of the junction member (10) has a continuous external contour (21) in the region of the integrally moulded portion (20), whereas the outer hollow body (11) forms a projecting collar (22).

9. A frame structure according to Claim 1, **characterized in that** the frame structure (1) can be used in particular for the supporting structure of a vehicle bodywork.

## Revendications

1. Structure de cadre (1) qui se compose de plusieurs éléments de cadre (2, 3, 4) tubulaires et d'éléments nodaux (5), les éléments de cadre (2, 3, 4) et les éléments nodaux (5) étant fabriqués par formage hydraulique sous haute pression interne et étant assemblés au moyen de liaisons à emboîtement (6), et chaque élément nodal (5) comportant au moins deux raccords (7, 8, 9) pour des éléments de cadre (2, 3, 4) adjacents, **caractérisée en ce qu'**au moins un élément nodal (5) est constitué d'au moins deux corps creux (10, 11) de forme tubulaire emboîtés l'un dans l'autre, constitués de matériaux différents, les deux corps creux (10, 11) formés sous haute pression interne de l'élément nodal (5) présentant des coupes différentes dans la zone des raccords (7, 8, 9) - vu dans la direction longitudinale de chaque raccord - et **en ce que** dans la zone de chaque raccord (7, 8, 9), l'un des deux corps creux (10, 11) est relié à l'élément de cadre (2, 3, 4) adjacent de même matériau, non seulement par la liaison à emboîtement (6), mais aussi par une liaison (14) supplémentaire.

2. Structure de cadre selon la revendication 1, **caractérisée en ce que** le corps creux intérieur (10) est fabriqué en aluminium ou dans un alliage d'aluminium, et le corps creux extérieur (11) est fabriqué en acier, ou inversement.

3. Structure de cadre selon la revendication 1, **caractérisée en ce que** le corps creux intérieur (10) est constitué d'aluminium ou d'un alliage d'aluminium et le corps creux extérieur (11) de magnésium ou d'un alliage de magnésium, ou inversement.

4. Structure de cadre selon la revendication 1, **caractérisée en ce que** le corps extérieur (11) dépasse, dans la zone d'un raccord (par exemple 7, 8) plus que le corps creux intérieur (10) et **en ce que** le corps creux extérieur (11) est relié fixement en outre, par soudage, collage, rivetage ou similaire, à une zone terminale (par exemple 12, 13) étagée, emboîtée à l'intérieur, de l'élément de cadre (2, 3) adjacent.

5. Structure de cadre selon la revendication 1, **caractérisée en ce que** le corps creux intérieur (10) dépasse plus dans la zone d'un raccord (par exemple 9) que le corps creux extérieur (11) et **en ce que** sur la zone dépassante du corps creux intérieur (10) est insérée ou emboîtée une zone de bordure de l'élément de cadre (4) adjacent, le corps creux intérieur (10) étant relié en outre fixement à l'élément de cadre (14), par soudage, collage, rivetage ou similaire.

6. Structure de cadre selon la revendication 1, **caractérisée en ce qu'**une zone terminale (19) étagée de l'élément de cadre (4) peut être insérée dans une fente annulaire (18) entre le corps creux intérieur (10) et le corps creux extérieur (11), et **en ce que** l'élément de cadre (4) est relié fixement en outre, par soudage, collage, rivetage ou similaire, au corps creux extérieur (11).

7. Structure de cadre selon la revendication 1, **caractérisée en ce que** l'élément nodal (5) présente localement un renflement (17), outre les raccords (7, 8, 9), le renflement (17) étant prévu sur les deux corps creux (10, 11) emboîtés l'un dans l'autre.

8. Structure de cadre selon la revendication 1, **caractérisée en ce que** l'élément nodal (5) comporte, outre les raccords pour les éléments de cadre (7, 8, 9), un autre bossage (20), le corps creux intérieur (10) de l'élément nodal (5) présentant un contour extérieur (21) fermé, dans la zone du bossage (20), tandis que le corps creux extérieur (11) forme une collerette (22) saillante.

9. Structure de cadre selon la revendication 1, **caractérisée en ce que** la structure de cadre (1) peut être appliquée en particulier pour la structure portante d'une carrosserie de véhicule.
